# EUROPÄISCHE PATENTANMELDUNG

(11) **EP 2 704 278 A1**
(43) Veröffentlichungstag der Anmeldung: **05.03.2014**
(21) Anmeldenummer: 12006090.0
(22) Anmeldetag: 28.08.2012
(51) Int. Cl.: H02G 3/14, F16B 23/00

(54) **Elektrisches Installationsgerät**

(71) Anmelder: GIRA GIERSIEPEN GmbH & Co. KG, D-42477 Radevormwald (DE)
(72) Erfinder: Vole, Andreas, 51688 Wipperfürth (DE); Kalinke, Jens, 42499 Hückeswagen (DE); Strehle, Ronny, 42499 Hückeswagen (DE); Weingärtner, Ilka, 51688 Wipperfürth (DE); Weingärtner, Günther, 51688 Wipperfürth (DE)
(74) Vertreter: Tönhardt, Marion

(57) **Zusammenfassung**

Die Erfindung betriff ein elektrisches Installationsgerät, mit einer Mehrzahl von Komponenten, die mittels Schrauben befestigbar und/oder verstellbar sind, dadurch gekennzeichnet, dass alle Schrauben (202, 204, 206, 208, 210, 212) für das elektrische Installationsgerät einen Kopf mit einer einheitlichen Konturierung des Innenantriebs (30) aufweisen, die für den Eingriff mindestens dreier unterschiedlicher Schraubwerkzeuge (A, B, C) gestaltet ist.

## Beschreibung

Die Erfindung betrifft ein elektrisches Installationsgerät, mit einer Mehrzahl von Komponenten, die mittels Schrauben befestigbar und/oder verstellbar sind. Ein solches elektrisches Installationsgerät kann beispielsweise eine Steckdose, ein Schalter, ein Dimmer oder ein anderes Gerät für die Gebäudesystemtechnik sein.

Elektrische Installationsgeräte werden in der Regel von einer Fachkraft verbaut, wobei eine Vielzahl von Schraubverbindungen hergestellt werden muss, beispielsweise für den Anschluss des spannungstragenden Leiters (L-Leiter), des Neutralleiters (N-Leiter), des Erdungsleiters, zur Gerätebefestigung, zur Abdeckungsbefestigung usw. Hierbei werden unterschiedliche Schraubentypen verwendet. So kommen für den Anschluss des L-Leiters, des N-Leiters und des Erdungsleiters einfache Schlitzschrauben zum Einsatz, bei denen eine axiale Kraft auf die Schraube und die Leiter aufgebracht wird, um die Leiter zu stauchen und damit für einen guten elektrischen Kontakt zur entsprechenden Fassung zu sorgen. Um die Abdeckung zu befestigen, werden oft Kreuzschlitzschrauben verwendet, die nur geringe axiale Kräfte ausüben, so dass eine versehentliche Zerstörung der zu verbindenden Bauteile weitgehend ausgeschlossen bleibt. Es sind auch solche Schrauben bekannt, bei denen ein Kreuzschlitz-Antrieb mit einem Schlitzantrieb kombiniert ist.

Bei speziellen Anwendungen, beispielsweise zur Montage elektrischer Installationsgeräte für die Tür- und/oder Hauskommunikation, wie in der DE 20 2004 005 624 U1 beschrieben, kommen auch sogenannte Torx-Schrauben zum Einsatz, die nach EN ISO 14583 als Flachkopfschrauben mit Innensechsrund genormt sind. Derartige Schrauben sind weiterhin in der DE 17 28 574 C2 und in der DE 42 06 222 C2 definiert. Wegen der senkrecht verlaufenden Antriebsflächen des Torx-Profils ist keine erhöhte Andruckkraft zum Festziehen erforderlich, auch treten nicht die als "cam out" bezeichneten Rückschubkräfte auf.

Es ist die Aufgabe der vorliegenden Erfindung, ein elektrisches Installationsgerät zur Verfügung zu stellen, bei dem die jeweilige Einbausituation einer Schraube ausreichend berücksichtigt werden kann.

Diese Aufgabe wird durch ein elektrisches Installationsgerät nach Anspruch 1 gelöst. Vorteilhafte Ausgestaltungen sind Gegenstand der Unteransprüche.

Erfindungsgemäß ist vorgesehen, dass alle Schrauben für das elektrische Installationsgerät einen Kopf mit einer einheitlichen Konturierung Innenantrieb aufweisen, die für den Eingriff mindestens dreier unterschiedlicher Schraubwerkzeuge gestaltet ist. Mit anderen Worten wird an allen Verschraubungspositionen eine zumindest in einem Kopfbereich identische Schraube verwendet. Diese kann mit einem einzigen Schraubwerkzeug oder mit unterschiedlichen Schraubwerkzeugen angezogen werden.

Vorteilhaft ist vorgesehen, dass die Konturierung Innenantrieb die Antriebe Schlitz, Kreuzschlitz und Sechsrund kombiniert. Die Fachkraft kann nun wählen, ob sie die Vorteile es Schlitzantriebes zum Stauchen ausnutzen will, an anderer Stelle die Vorteile des Kreuzschlitzes oder des Sechsrundes, um mit geringeren axialen Kräften zu arbeiten. Die Fachkraft kann aber auch ein und dasselbe Werkzeug an allen Verbindungspositionen verwenden, was eine schnelle und zügige Montage verspricht, da umständliches Suchen nach dem passenden Werkzeug entfällt.

Bevorzugt ist der Kreuzschlitz-Antrieb ein Pozidriv-Antrieb, bei dem der Schraubendreher in planparallelen Nuten geführt wird. Auch mit dem Pozidriv-Antrieb kann sensibel verschraubt werden, da kein Zusammenhang zwischen der axialen Anpresskraft des Schraubwerkzeuges auf die Schraube und ihrem Anzugsdrehmoment besteht.

Nach einer weiter bevorzugten Ausgestaltung weist der Kopf jeder Schraube einen über den Durchmesser verlaufenden Schlitz mit offenen Enden und einen diesen mittig senkrecht schneidenden Schlitz mit geschlossenen Enden auf.

Besonders bevorzugt ist, dass zwei einander diametral gegenüberstehende konvexe Rundungen des Sechsrunds mit dem Schlitz mit offenen Enden ausgerichtet sind. Auf diese Weise können die Antriebe Schlitz, Kreuzschlitz und Sechsrund optimal in einem Schraubenkopf vereinigt werden, ohne dass deren positive Eigenschaften verloren gehen.

Im Folgenden soll die Erfindung anhand der beigefügten Zeichnung näher erläutert werden. Dabei zeigt:
- Figur 1: verschiedene Schnitt- und Seitenansichten sowie eine perspektivische Ansicht einer für das elektrische Installationsgerät der vorliegenden Erfindung verwendbare Schraube;
- Figur 2: die Verwendung der Schraube gemäß Figur 1 mit verschiedenen Schraubwerkzeugen; und
- Figur 3: eine Steckdose als Beispiel für ein elektrisches Installationsgerät mit einer Vielzahl von Schrauben gemäß Figur 1.

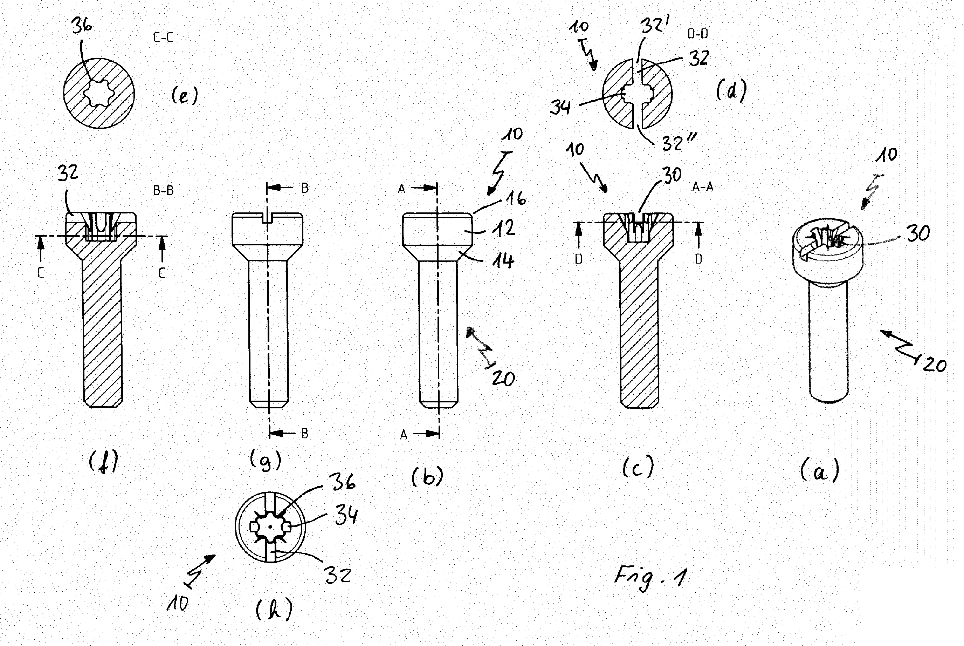

Figur 1 zeigt eine Schraube für ein elektrisches Installationsgerät gemäß der vorliegenden Erfindung in einer perspektivischen Ansicht im Teilbild (a). Die Schraube besteht aus einem Kopf 10, an den sich ein mit Gewinde versehener Schaft 20 anschließt. Aus Gründen der Einfachheit der Darstellung ist das Gewinde nicht gezeigt. Der Kopf 10 weist einen Innenantrieb 30 auf, dessen Konturierung im Folgenden beschrieben wird.

Teilbild (b) zeigt die Schraube von einer Seite her. Der Kopf 10 ist aus drei Abschnitten 12, 14, 16 zusammengesetzt, nämlich einen zylindrischen Hauptabschnitt 12, der über eine Abschrägung 14 in den Schaft 20 übergeht, wobei der Hauptabschnitt 12 zum freien Ende des Kopfes 10 hin mit einer Abschrägung 16 geringer Höhe abgeschlossen wird.

Teilbild (c) ist eine Schnittdarstellung längs der Linie A-A aus Teilbild (b). In den Kopf 10 ist ein Innenantrieb 30 mit einer Konturierung eingebracht, die in der Schnittansicht links der Linie D-D, in Teilbild (d) gezeigt, besser zu erkennen ist. Der Innenantrieb weist einen Schlitz 32 auf, der sich über einen Durchmesser des Kopfes 10 erstreckt und mit einer vorbestimmten Tiefe in die Abschrägung 16 und den Hauptabschnitt 12 (Teilbild (b)) eingebracht ist. Der Schlitz 32 hat offene Enden 32', 32", die sich diametral gegenüberstehen. Senkrecht zu dem Schlitz 32 ist, den Schlitz 32 mittig schneidend, ein Schlitz 34 eingebracht, dessen Enden geschlossen sind, der sich also nicht über den gesamten Durchmesser des Kopfes 10 erstreckt. Der Schlitz 34 bildet mit dem Schlitz 32 einen Kreuzschlitz-Antrieb, der bei der dargestellten Ausführungsform als Pozidriv-Antrieb ausgebildet ist. Der Kontur aus Schlitz 32 und Schlitz 34 ist ein Innensechsrund 36 überlagert, der sich mit einem Querschnitt, wie in Teilbild (e) gezeigt, bis in eine bestimmte Tiefe des Hauptabschnittes 12 des Kopfes 10 erstreckt. Ab einer gewissen Tiefe, deren Lage die Schnittlinie C-C in Teilbild (f) verdeutlicht, liegt nur noch die Konturierung des Sechsrunds 36 vor, nicht aber die des Pozidriv-Antriebes oder die des Längsschlitzes 32.

Teilbild (g) zeigt eine weitere Seitenansicht der Schraube, um 90° gegenüber der Seitenansicht des Teilbildes (b) gedreht. Die Schnittansicht des Teilbildes (f) ist entlang der Linie B-B aus Teilbild (g) gelegt.

Teilbild (h) schließlich zeigt eine Draufsicht auf den Kopf 10 gemäß Teilbild (g). Es ist zu erkennen, dass zwei einander diametral gegenüberliegende konvexe Rundungen des Sechsrunds 36 mit dem Schlitz 32 ausgerichtet sind, während zwei konkave Rundungen des Sechsrunds 36 mit dem Schlitz 34 ausgerichtet sind. Insgesamt ergibt sich so eine optimierte Konturierung, bei der die vorteilhaften Eigenschaften von durchgehendem Schlitz 32, Pozidriv-Antrieb als Kombination der Schlitze 32, 34 und Sechsrund 36, jeweils mit entsprechender Konturierung in Tiefenrichtung, optimiert.

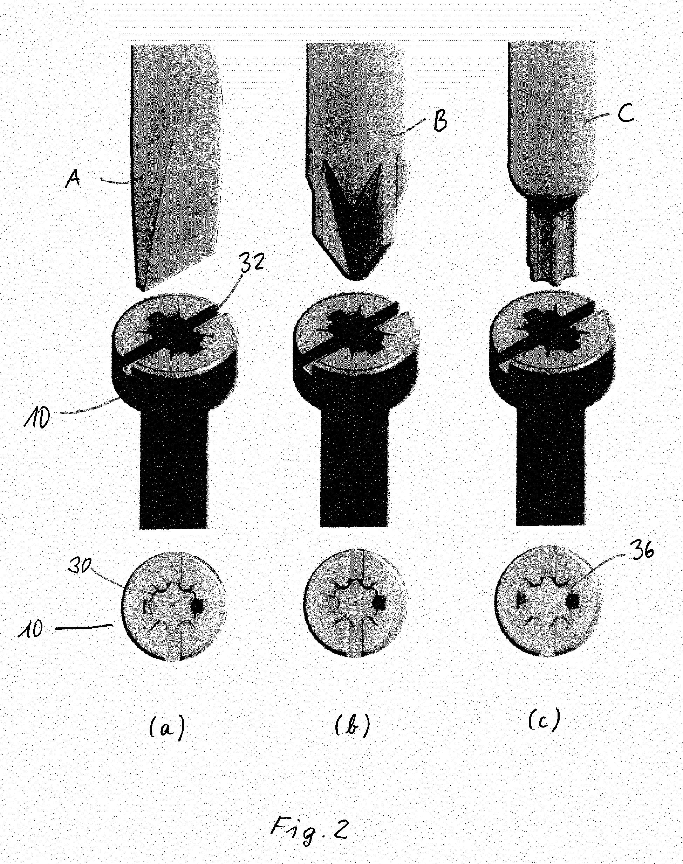

Figur 2 veranschaulicht das Zusammenwirken einer Schraube gemäß Figur 1 mit unterschiedlichen Schraubwerkzeugen, wobei untereinander das jeweilige Schraubwerkzeug A, B oder C, eine Schraube zur Verwendung bei einem elektrischen Installationsgerät der vorliegenden Erfindung sowie eine Draufsicht auf den Kopf gezeigt ist.

Im Teilbild (a) ist ein Schlitzschraubenzieher A gezeigt, der zum Eingriff in den Schlitz 32 des Kopfes 10 der Schraube ausgelegt ist. Mit dem Schraubwerkzeug A kann daher gearbeitet werden, wenn eine große axiale Kraft auf die Schraube ausgeübt werden soll, beispielsweise um die Leiter für den Netzanschluss für einen guten elektrischen Kontakt zu stauchen. Die Draufsicht auf den Kopf 10 zeigt die mit dem Schraubwerkzeug A genutzten Bereiche der Konturierung des Innenantriebs 30, nämlich die des Schlitzes 32.

Teilbild (b) zeigt das Zusammenwirken der Schraube mit einem Schraubwerkzeug B, das für einen Kreuzschlitz-Antrieb, insbesondere einen Pozidriv-Antrieb, ausgelegt ist. Man erkennt, dass beim Schraubwerkzeug B die vier Klingen planparallel gefräst sind, wobei sich die entsprechende komplementäre Struktur in der Konturierung des Innenantriebs 30 wiederfindet. Die Klingen greifen in die Schlitze 32, 34 des Innenantriebs 30, wie durch die Draufsicht auf den Kopf 10 veranschaulicht wird. Die Schraube kann mit geringen axialen Kräften eingedreht und angezogen werden.

Teilbild (c) zeigt ein Schraubwerkzeug C, das für den Torx-Eingriff ausgelegt ist. Diese greift in das Sechsrund 36, wobei bei entsprechender Auslegung gemäß DE 42 06 222 C2 praktisch keinerlei axiale Kräfte mehr auf die Schraube ausgeübt werden.

Die Fachkraft hat nun die Wahl, einerseits das optimale Werkzeug für die Verbindungssituation auszuwählen, andererseits auch alle Verbindungsvorgänge mit nur einem Werkzeug abzuarbeiten, da ja nur ein und derselbe einheitliche, multifunktionale Innenantrieb bei der Schraube an allen Verbindungsstellen im elektrischen Installationsgerät eingesetzt wird.

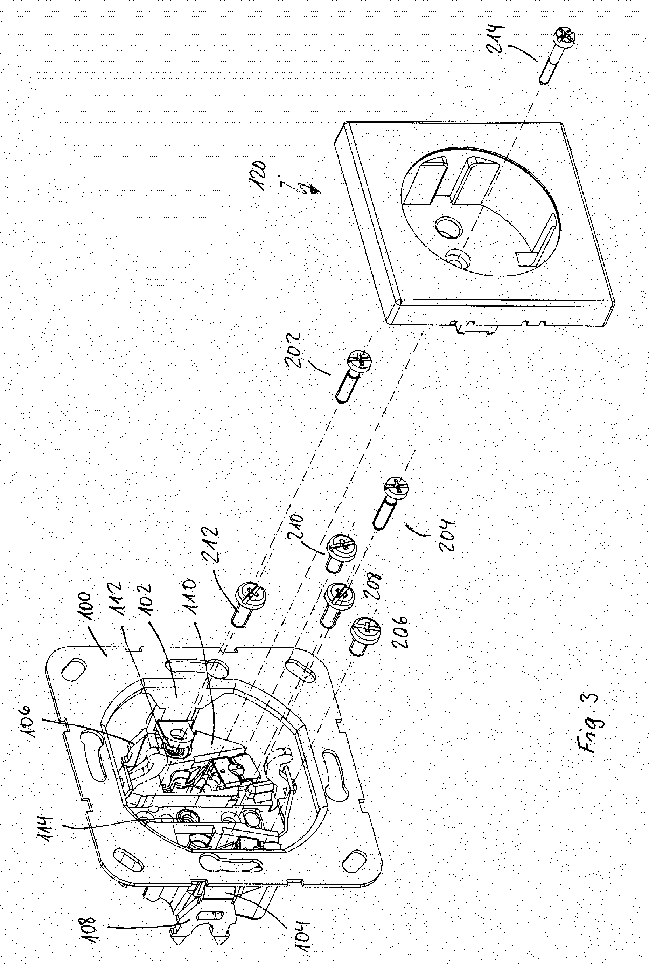

Figur 3 zeigt in einer Explosionsdarstellung ein elektrisches Installationsgerät, nämlich eine Unterputz-Steckdose, bei der gemäß der vorliegenden Erfindung alle Schrauben einen Kopf mit einer einheitlichen Konturierung des Innenantriebs aufweisen, wie sie im Zusammenhang mit den Figuren 1 und 2 beschrieben ist. Eine solche Steckdose weist einen Tragrahmen 100 auf, der über Verbindungsstege 102, 104 mit einem Chassis 110 verbunden ist. Die Verbindungsstege 102, 104 weisen an ihren freien Enden Spreizkrallen 106, 108 auf, die der Verankerung in einer Unterputzdose dienen. Die Befestigung bzw. die Verkrallung besteht über zwei Einstellschrauben 202, 204, die in entsprechende Gewindebuchsen, z. B. 112, im Chassis eingeschraubt werden. Der Anschluss des L-Leiters, des N-Leiters und des Erdungsleiters erfolgt über entsprechende Schraubkontakte, in die Schrauben 206, 208, 210 einzuschrauben sind, die einen identischen Kopf haben wie die Schrauben 202, 204, aber einen kürzeren Schaft mit größerem Durchmesser, damit die gewünschte Stauchung der Leiter erfolgen kann. Eine Schraube 212 dient dem ISA-Anschluss. Auf die montierte Unterputz-Steckdose wird dann eine Abdeckung 120 aufgebracht, die ebenfalls mit Hilfe einer Schraube 214 am Chassis 110 in eine entsprechende Gewindebuchse 114 geschraubt wird. Insgesamt werden beim vorliegenden Beispiel sieben Schrauben 202, 204, 206, 208, 210, 212, 214 verwendet, die, obwohl sie in ihren Abmessungen des Schaftes und im Durchmesser des Kopfes unterschiedlich sind, eine einheitliche Konturierung des Innenantriebs aufweisen, so dass alle Schrauben mit ein und demselben Werkzeug, sei es ein Schlitz-Schraubwerkzeug, ein Kreuzschlitz-Schraubwerkzeug oder ein Schraubwerkzeug für ein Sechsrund, geschraubt werden können. Es bleibt der Fachkraft außerdem unbenommen, beispielsweise für die Fixierung der Abdeckung 120 ein besonders angepasstes Werkzeug, beispielsweise ein Werkzeug für einen Sechsrund, zu verwenden, um die Schraubverbindung ohne Aufbringung axialer Kräfte vornehmen zu können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Elektrisches Installationsgerät, mit einer Mehrzahl von Komponenten, die mittels Schrauben befestigbar und/oder verstellbar sind, **dadurch gekennzeichnet, dass** alle Schrauben (202, 204, 206, 208, 210, 212) für das elektrische Installationsgerät einen Kopf mit einer einheitlichen Konturierung des Innenantriebs (30) aufweisen, die für den Eingriff mindestens dreier unterschiedlicher Schraubwerkzeuge (A, B, C) gestaltet ist.

2. Elektrisches Installationsgerät nach Anspruch 1, **dadurch gekennzeichnet, dass** die Konturierung des Innenantriebs (30) die Antriebe Schlitz (32), Kreuzschlitz (32, 34) und Sechsrund (36) kombiniert.

3. Elektrisches Installationsgerät nach Anspruch 2, **dadurch gekennzeichnet, dass** der Kreuzschlitz-Antrieb (32, 34) ein Pozidriv-Antrieb ist.

4. Elektrisches Installationsgerät nach Anspruch 2 oder 3, **dadurch gekennzeichnet, dass** der Kopf (10) jeder Schraube einen über den Durchmesser verlaufenden Schlitz (32) mit offenen Enden und einen diesen mittig senkrecht schneidenden Schlitz (34) mit geschlossenen Enden aufweist.

5. Elektrisches Installationsgerät nach Anspruch 4, **dadurch gekennzeichnet, dass** zwei einander diametral gegenüberliegende konvexe Rundungen des Sechsrunds (36) mit dem Schlitz (32) mit offenen Enden ausgerichtet sind.
